# EUROPEAN PATENT APPLICATION

(11) **EP 1 657 666 A1**
(43) Date of publication of application: **17.05.2006**
(21) Application number: 04026706.4
(22) Date of filing: 10.11.2004
(51) Int. Cl.: G06K 19/077

(54) **IC tag and method for manufacturing the IC tag**

(71) Applicant: Umeda, Shinichi, Asaka-shi Saitama (JP)
(72) Inventor: Umeda, Shinichi, Asaka-shi Saitama (JP)
(74) Representative: Popp, Eugen

(57) **Abstract**

The IC tag is produced via the method that is operated to print an IC wiring on a surface of a mount; print the non-conductivity varnish agent between conduction poles of the IC wiring after printing; and print barbell for producing static electricity to the conduction pole of IC wiring. Therefore, it can be manufactured without loss of producing and large cost and in efficiency.

## Description

### BACKGROUND OF THE INVENTION

This invention relates to an IC tag and method for manufacturing the IC tag that can be used for theft prevention and distribution channel management of goods and the like, and more particularly such a IC tag and method for manufacturing the IC tag that is operated to print an IC wiring on a surface of a mount; print the non-conductivity varnish agent between conduction poles of the IC wiring after printing; and print barbell for producing static electricity to the conduction pole of the IC wiring.

For the conventional method for manufacturing IC, the wiring has to be printed on the surface of the mount of IC. In addition, barbell processing for turning on electricity to the back of the mount had to be performed as a method for preventing contact short of electrodes after the wiring is printed on the surface of the mount.

In addition, for the conventional method for manufacturing IC, it is difficult to form the through hole for turning on electricity to the back of the mount and to operate the barbell processing as a method for preventing contact short of electrodes after the wiring is printed on the surface of the mount.

Moreover, for the conventional method for manufacturing IC, the barbell processing for turning on electricity to the back of the mount is generally very expensive in order to process for forming the through hole and produce barbell at both sides of the mount as a method for preventing contact short of electrodes after the wiring is printed on the surface of the mount.

### SUMMARY OF THE INVENTION

Accordingly, it is an object of the present invention to provide an IC tag and method for manufacturing the IC tag which can be operated to print an IC wiring on a surface of a mount without using the back surface of the mount, print the non-conductivity varnish agent between conduction poles of the IC wiring after printing and print barbell for producing static electricity to the conduction pole of the IC wiring. It is another object of the present invention to provide an IC tag that can be manufactured cheaply without loss of producing and in efficiency.

The present invention is understood to encompass embodiments which include all or only a portion of the above objects, features and advantages which, unless recited in claims defining the invention, are understood not to limit interpretation of such claims. The above, and other objects, features and advantages of the present invention will become apparent from the following description read in conjunction with the accompanying drawings, in which like reference numerals designate the same elements.

It is to be expressly understood, however, that the drawings are for the purpose of illustration and description only, and are not intended as a definition of the limits of the invention.

### BRIEF DESCRIPTION OF THE DRAWINGS

Fig. 1 is a flow chart for the manufacturing an IC tag in prior art;
Fig. 2 is a schematic view of an IC tag in prior art;
Fig. 3 is a cross sectional view of an IC tag in prior art;
Fig. 4 is a flow chart for the manufacturing an IC tag showing an embodiment of the present invention;
Fig. 5 is a schematic view of an IC tag showing an embodiment of the present invention;
Fig. 6 is a schematic view of an IC tag showing an embodiment of the present invention; and
Fig. 7 is a cross sectional view of an IC tag showing an embodiment of the present invention.

### DETAILD DESCRIPTION OF THE PREFERRED EMBODIMENTS

Preferred embodiments of the present invention are described in more detail below referring to the accompanying drawings.

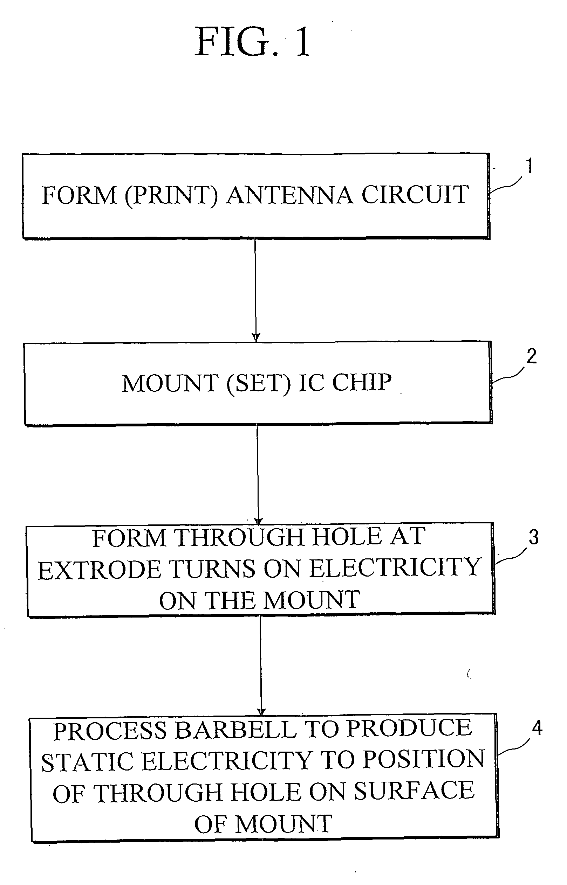

Fig. 1 shows a flow chart for the manufacturing an IC tag in prior art. The method for manufacturing an IC tag in prior art includes a first process 1 for forming an antenna circuit by printing an IC wiring on a back surface of a mount body; a second process 2 for mounting an IC tip in the antenna circuit formed in the first process 1; a third process for forming a through hole at a position of electrode which turns on electricity in the antenna circuit of the mount; and a fourth process for operating a barbell process in order to produce static electricity to a surface position of the trough hole, which is formed in the third process 3, of the mount.

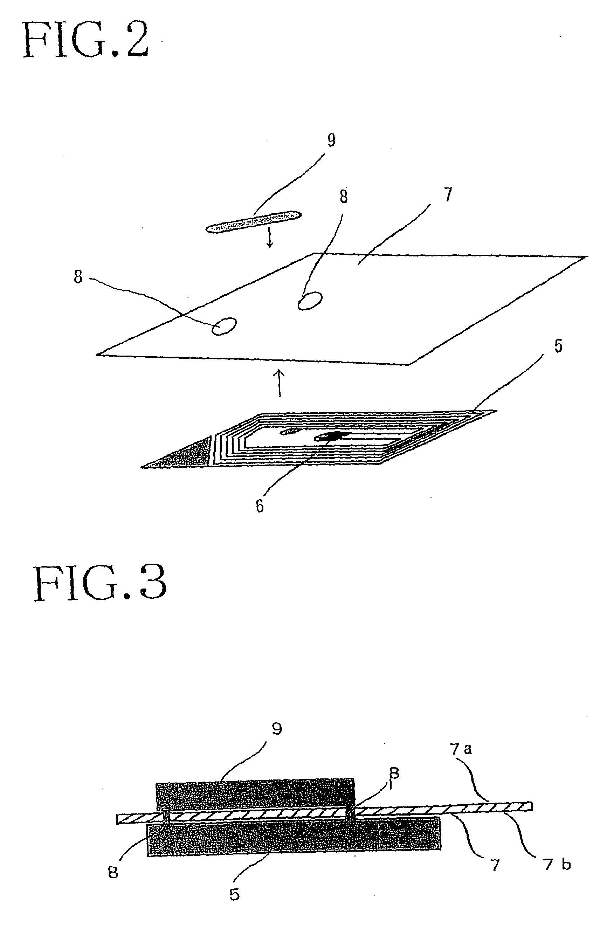

Fig. 2 shows the conventional IC formed from the manufacturing process in Fig.1. The IC wiring 5 is printed to a back 7b of a mount 7, and the IC tip 6 is mounted. After that, a through hole 8 is formed at the position of electrode which turns on electricity at the mount 7, and a barbell 9 for producing static electricity is formed in a surface position of the trough hole.

Fig. 3 shows a sectional view of the conventional IC which illustrated in Fig. 2. The IC wiring 5 is printed at the back of the mount 7, and the barbell 9 is provided at the position of the through hole 8 which is formed in the mount body 7.

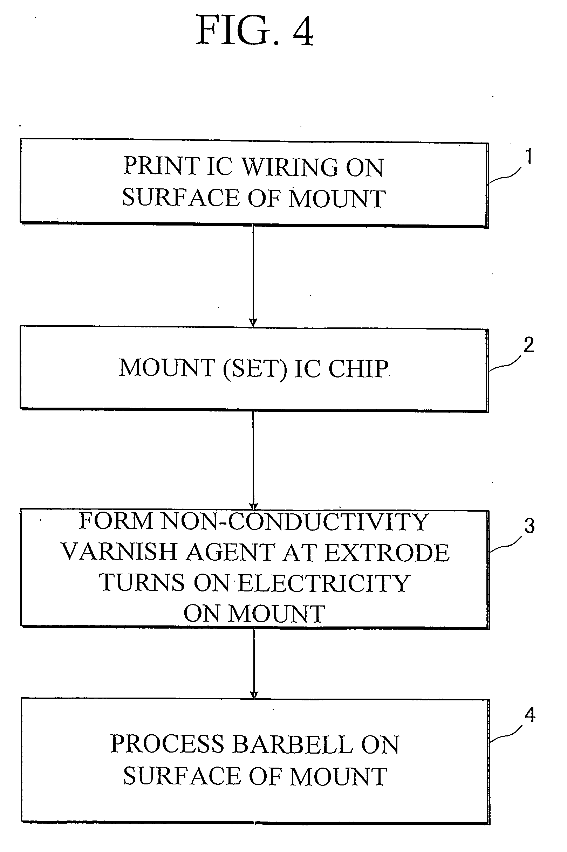

On the other hand, Fig. 4 shows an IC tag of the present invention. An IC wiring 5a is printed on the surface 7a of the mount, and an IC chip 6a is mounted. In addition, a non-conductivity varnish agent 10 is provided on the IC wiring 5a in order to prevent to contact a barbell 9a with the IC wiring 5a, and the barbell 9a is processed into the contact position of electrode.

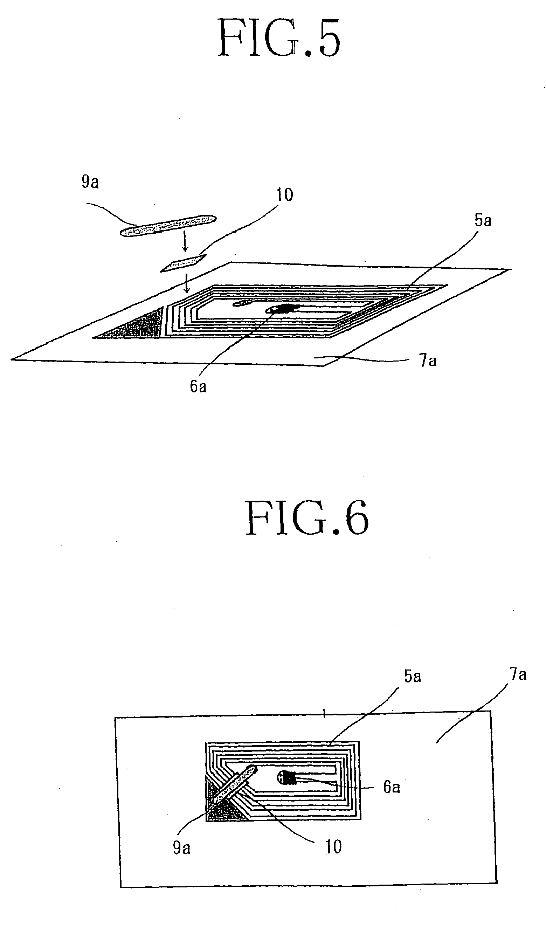

Fig. 5 shows a schematic explanation view of the IC of the present invention. The IC wiring 5a, the mounting of the IC chip 6a, the non-conductivity varnish agent 10 and barbell 9a are processed on the surface 7a of the mount 7 in order.

Fig. 6 shows a cross sectional view of the present invention. The IC wiring 5 a, b, c, the non-conductivity varnish agent 10 and barbell 9a go over in order from below.

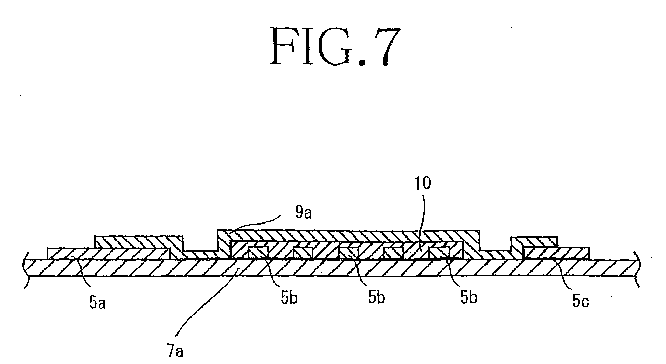

Fig. 7 shows a flow chart for the manufacturing the IC tag of the present invention. The manufacturing of the IC tag of the present invention includes a first process 11 for forming the antenna-coil IC wiring 5a on the surface 7a of the mount 7, the IC wiring 5a having both ends thereof; a second process 12 for mounting the IC tip 6a; a third process for providing the non-conductivity varnish agent 10 which covers without turning on electricity to parts between one end portion and other end portion of the IC wiring 5a; and a fourth process for connecting the barbell 9a between one end portion and other end portion of the IC wiring 5a on the cover layer without contacting other IC wiring. In addition, the IC wiring 5a and the barbell 9a are printed and arranged.

As set forth above, the advantages of the invention are as follows:
(1) The IC tag includes a mount body for an IC tag; an IC wiring arranged on a surface of the mount body so that the IC wiring defines an antenna coil, the IC wiring having both ends thereof, a cover layer which covers without turning on electricity to parts positioned one end portion and other end portion of the IC wiring; and a barbell connected between the one end portion and the other end portion of the IC wiring on the cover layer without contacting other IC wiring. Therefore, it can be manufactured without loss of producing and in efficiency.
(2) As discussed above, since the IC wiring and the barbell are printed and arranged on the mount body, it can be reduced it's cost greatly.
(3) A method for manufacturing an IC tag include a step of producing a mount body for an IC tag; arranging an IC wiring on a surface of the mount so that the IC wiring defines an antenna coil, the IC wiring having both ends thereof, covering a cover layer which covers without turning on electricity to parts of one end portion and other end portion of the IC wiring; and connecting a barbell between the one end portion and the other end portion of the IC wiring on the cover layer without contacting other IC wiring. Therefore, it can be manufactured without loss of producing and in efficiency, and it can be reduced it's cost greatly.
(4) As discussed above, since the IC wiring and the barbell are printed and arranged on the mount body, it can be manufactured without loss of producing and in efficiency, and it can be reduced it's cost greatly. In addition, it can memorize goods information and other information in efficiency without large cost.

## Claims

1. An IC tag comprising:
a mount body for an IC tag;
an IC wiring arranged on a surface of the mount body so that the IC wiring defines an antenna coil, the IC wiring having both ends thereof,
a cover layer which covers without turning on electricity to parts positioned one end portion and other end portion of the IC wiring; and
a barbell connected between the one end portion and the other end portion of the IC wiring on the cover layer without contacting other IC wiring.

2. An IC tag according to claim 1, wherein the IC wiring and the barbell are printed and arranged on the mount body.

3. A method for manufacturing an IC tag including a step of:
producing a mount body for an IC tag;
arranging an IC wiring on a surface of the mount so that the IC wiring defines an antenna coil, the IC wiring having both ends thereof,
covering a cover layer which covers without turning on electricity to parts of one end portion and other end portion of the IC wiring; and
connecting a barbell between the one end portion and the other end portion of the IC wiring on the cover layer without contacting other IC wiring.

4. A method for manufacturing an IC tag according to claim 3, wherein the IC wiring and the barbell are printed and arranged on the mount body.
